# EUROPEAN PATENT APPLICATION

(11) **EP 4 831 840 A1**
(43) Date of publication of application: **28.10.2026**
(21) Application number: 24932641.4
(22) Date of filing: 30.12.2024
(51) Int. Cl.: G06F 18/22, B66C 15/00, B66C 23/88, B66C 13/48, B66C 23/90

(54) **BOOM IDENTIFICATION METHOD, PROCESSOR, BOOM IDENTIFICATION APPARATUS, AND COMPUTER-READABLE STORAGE MEDIUM**

(30) Priority: 28.03.2024 CN 202410369497
(71) Applicant: Zoomlion Heavy Industry Science and Technology Co., Ltd., Changsha, Hunan 410013 (CN)
(72) Inventor: LIU, Lang, Changsha, Hunan 410013 (CN); GUO, Jimei, Changsha, Hunan 410013 (CN); LUO, Xianzhi, Changsha, Hunan 410013 (CN); LI, Wenyan, Changsha, Hunan 410013 (CN); LI, Dalin, Changsha, Hunan 410013 (CN)
(74) Representative: Metida
(86) International application number: PCT/CN2024/144045
(87) International publication number: WO 2025/200674

(57) **Abstract**

Disclosed are a boom identification method, a processor, a boom identification apparatus, and a computer-readable storage medium. The boom identification method comprises: obtaining an output current *I*_{*N*2} of an Nth boom section, receiving by an Xth boom section an output current *I*_{(X+1)2} of an (X+1)th boom section as an input current *I*_{X1} of the Xth boom section, and processing the input current *I*_{X1} to obtain an output current *I*_{X2} of the Xth boom section (S11); processing an output current *I*₁₂, and obtaining identification parameters of boom sections (S13); and obtaining the current boom section types and the connection relationship of a boom on the basis of the identification parameters of the boom sections, and on the basis of the current boom section types and the connection relationship, determining whether the types and the connection relationship of the boom sections are correct (S15). The types of the boom sections of the boom can be identified, and the connection sequence relationship of the boom sections can also be identified, thereby ensuring that the boom uses the correct boom section types and connection is performed in a correct sequence, and thus reducing safety accidents caused by boom section identification errors and reducing casualties and property loss.

## Description

This disclosure claims priority to Chinese patent application CN2024103694978, filed on 28 March 2024, entitled "Boom Identification Method, Processor, Boom Identification Apparatus, and Computer-Readable Storage Medium", the entire contents of which are hereby incorporated by reference.

### TECHNICAL FIELD

The present application relates to the technical field of construction machinery, and in particular, to a boom identification method, a processor, a boom identification apparatus, and a computer-readable storage medium.

### BACKGROUND

In order to expand the working radius and increase the operating range during lifting operations, a truck crane usually adds several or even tens of lattice boom sections at the end of a box boom; a crawler crane basically adopts a lattice boom. These lattice boom sections are of different types yet have similar external appearances, and according to different working conditions, these lattice boom sections have different installation position requirements. During manual installation of lattice booms, errors in the type of lattice boom section installed or in the installation position of the lattice boom section are prone to occur. Performing lifting operations under incorrect installation conditions is highly likely to cause safety accidents, resulting in casualties and property loss. At present, crane lattice booms on the market mainly rely on manual inspection, which is prone to errors. In addition to cranes, concrete pump trucks also include multi-section booms, and have similar problems described above.

### SUMMARY OF THE DISCLOSURE

In view of the foregoing, an object of the present application is to provide a boom identification method, a processor, a boom identification apparatus, and a computer-readable storage medium, so as to identify types and a connection sequence of boom sections, reduce safety accidents caused by incorrect identification of boom sections, and thereby reduce casualties and property loss.

The present application provides the boom identification method, for identifying type and installation sequence of a boom, the boom including N sequentially connected boom sections, each of the boom sections having a built-in identification parameter (*aₓ,bₓ,φₓ*)*,* wherein parameters *aₓ* and *bₓ* are mapped to a type of a corresponding boom section, and a parameter *φₓ* characterizes a connection relationship between a boom section and a subsequent boom section, wherein the method includes:
obtaining, by an Nth boom section, an output current *I*_{*N*2} of the Nth boom section through data processing; for a (N-1)th boom section to a first boom section, an Xth boom section receives an output current *I*_{(X+1)2} of a (X+1)th boom section as an input current *I*_{X1} of the Xth boom section, and processes the input current *I*_{X1} to obtain an output current *I*_{X2} of the Xth boom section, wherein X is a positive integer greater than or equal to 1;
processing an output current *I*₁₂ of the first boom section to obtain identification parameters from the first boom section to the Nth boom section;
obtaining a current boom section type and a connection relationship of the boom according to the identification parameters of respective boom sections, and determining whether types and connection relationships of the boom sections of the boom are correct according to the current boom section type and the connection relationship.

In some embodiments, the boom identification method further includes:
limiting lifting of the boom when the current boom section type and the connection relationship are incorrect.

In some embodiments, in the step of obtaining the output current *I*_{X2} of the Xth boom section:
for the Nth boom section: using a current component as the output current *I*_{*N*2} of the Nth boom section;
for the (N-1)th boom section to the first boom section:
   receiving the output current *I*_{(X+1)2} of a (X+1)th boom section as the input current *I*_{X1} of the Xth boom section;
   performing a Fourier transform on the input current *I*_{X1} to obtain *F*(*I*_{*X*1});
   phase-shifting a component with zero initial phase in *F*(*I*_{*X*1}) to obtain *F*₂(*I*_{*X*1});
   performing an inverse Fourier transform on *F*₂(*I*_{*X*1}) to obtain ${F}_{2}^{- 1} \left({I}_{X 1}\right)$;
   adding the current component to ${F}_{2}^{- 1} \left({I}_{X 1}\right)$ to obtain *I*_{X2};
   using *I*_{X2} as the output current *I*_{X2} of the Xth boom section.

In some embodiment, for the Nth boom section, a current component *a_{N}* cos(*b_{N}t*) is used as the output current *I*_{*N*2} of the Nth boom section;
for the (N-1)th boom section to the first boom section, in a process of phase-shifting the component with zero initial phase in *F*(*I*_{X1}) to obtain *F*₂(*I*_{X1}), the component with zero initial phase in *F*(*I*_{X1}) is phase-shifted to the right by *φ_{X}* to obtain *F*₂(*I*_{X1}); in a process of obtaining *I*_{X2} , the current component *a_{X}* cos(*b_{X}t*) is added to ${F}_{2}^{- 1} \left({I}_{X 1}\right)$ to obtain ${I}_{X 2} = {F}_{2}^{- 1} \left({I}_{X 1}\right) + {a}_{X} cos \left({b}_{X}t\right)$.

In some embodiments, the step of obtaining the identification parameters from the first boom section to the Nth boom section specifically includes:
performing the Fourier transform on the output current *I*₁₂ of the first boom section to obtain $F \left({I}_{12}\right) = π \left\{\begin{matrix}{a}_{1} \left[δ\left(ω-{b}_{1}\right)+δ\left(ω+{b}_{1}\right)\right] + {a}_{2} \left[{e}^{{jφ}_{1}}δ\left(ω-{b}_{2}\right)+{e}^{- {jφ}_{1}}δ\left(ω+{b}_{2}\right)\right] + \\ ⋯ + {a}_{N} \left[{e}^{{jφ}_{X}}δ\left(ω-{b}_{N}\right)+{e}^{- {jφ}_{X}}δ\left(ω+{b}_{N}\right)\right]\end{matrix}\right\}$;
obtaining the identification parameters (*a*₁,*b*₁*,*0), (*a*₂,*b*₂*,φ*₁), ..., (*a_{N},b_{N},φ*_{*N*-1}) of the first boom section to the Nth boom section according to $F \left({I}_{12}\right) = π \left\{\begin{matrix}{a}_{1} \left[δ\left(ω-{b}_{1}\right)+δ\left(ω+{b}_{1}\right)\right] + {a}_{2} \left[{e}^{{jφ}_{1}}δ\left(ω-{b}_{2}\right)+{e}^{- {jφ}_{1}}δ\left(ω+{b}_{2}\right)\right] + \\ ⋯ + {a}_{N} \left[{e}^{{jφ}_{X}}δ\left(ω-{b}_{N}\right)+{e}^{- {jφ}_{X}}δ\left(ω+{b}_{N}\right)\right]\end{matrix}\right\}$.

In some embodiments, the boom includes three sequentially connected boom sections G-H-K, and the method specifically includes:
obtaining, by a K boom section, an output current *I*_{*K*2} of the K boom section through data processing, a H boom section receives the output current *I*_{*K*2} of the K boom section as an input current *I*_{*H*1} of the H boom section, and processes the input current *I*_{*H*1} of the H boom section to obtain an output current *I*_{*H*2} of the H boom section, a G boom section receives the output current *I*_{*H*2} of the H boom section as an input current *I*_{*G*1} of the G boom section, and processes the input current *I*_{*G*1} of the G boom section to obtain an output current *I*_{*G*2} of the G boom section;
processing the output current *I*_{*G*2} of the G boom section to obtain identification parameters from the K boom section to the G boom section in sequence as (*a_{G},b_{G,}*0), (*a_{H},b_{H},φ_{G}*), (*a_{K},b_{K},φ_{H}*);
obtaining the current boom section type and the connection relationship of the boom according to the identification parameters (*a_{G},b_{G}*,0), (*a_{H},b_{H},φ_{G}*), (*a_{K},b_{K},φ_{H}*) from the K boom section to the G boom section, and determining whether types and connection relationships of the G boom section, the H boom section, and the K boom section of the boom are correct according to the current boom section type and the connection relationship.

In some embodiments, the step of obtaining the output current *I*_{*G*2} of the G boom section specifically includes:
obtaining, by the K boom section, the output current *I*_{*K*2} of the K boom section as *I*_{*K*2} *= a_{K}cos*(*b_{K}t*) through the data processing;
receiving the output current *I*_{*K*2} of the K boom section as the input current *I*_{*H*1} of the H boom section;
performing the Fourier transform on the input current *I*_{*H*1} of the H boom section to obtain *F*(*I*_{*H*1})=*π*{*a_{K}*[*δ*(*ω-b_{K}*)+*δ*(*ω+b_{K}*)]}*.*
phase-shifting to the right the component with zero initial phase in *F*(*I*_{*H*1}) by *φ_{H}* to obtain *F*₂(*I*_{*H*1}) = *π*{*a_{K}*[*e^{jφH}δ*(*ω-b_{K}*)*+e^{-jφH}δ*(*ω+b_{K}*)]};
performing the Fourier transform on *F₂*(*I*_{*H*1}) to obtain ${F}_{2}^{- 1} \left({I}_{H 1}\right) = {a}_{K} cos \left({b}_{K}t+{φ}_{H}\right)$;
adding a current component *a_{H}cos*(*b_{H}t*) to ${F}_{2}^{- 1} \left({I}_{H 1}\right)$ to obtain the output current *I*_{*H*2} of the H boom section as ${I}_{H 2} = {F}_{2}^{- 1} \left({I}_{H 1}\right) + {a}_{H} cos \left({b}_{H}t\right) = {a}_{H} cos \left({b}_{H}t\right) + {a}_{K} cos \left({b}_{K}t+{φ}_{H}\right)$;
receiving the output current *I*_{*H*2} of the H boom section as the input current *I*_{*G*1} of the G boom section;
performing the Fourier transform on the input current *I*_{*G*1} of the G boom section to obtain *F*(*I*_{*G*1})=*F*(*I*_{*H*2})*=π*{*a_{H}*[*δ*(*ω-b_{H})*+*δ*(*ω+b_{H}*)]+*a_{K}*[*e^{jφH}δ*(*ω-b_{K}*)*+e^{jφH}δ*(*ω+b_{K}*)]}*.*
phase-shifting to the right the component with zero initial phase in *F*(*IG*₁) by *φ_{G}* to obtain *F*₂(*I*_{*G*1})*=π*{*a_{H}*[*e^{jφG}δ*(*ω-b_{H})*+*e^{jφG}δ*(*ω+b_{H}*)]+*a_{K}*[*e^{jφH}δ*(*ω-b_{K}*)*+e^{jφH}δ*(*ω+b_{K}*)]};
performing the Fourier transform on *F*₂(*IG*₁) to obtain ${F}_{2}^{- 1} \left({I}_{G 1}\right) = {a}_{H} cos \left({b}_{H}t+{φ}_{G}\right) + {a}_{K} cos \left({b}_{K}t+{φ}_{H}\right)$;
adding a current component *a_{G}*cos(*b_{G}t*) to ${F}_{2}^{- 1} \left({I}_{G 1}\right)$ to obtain the output current *I*_{*G*2} of the G boom section as ${I}_{G 2} = {F}_{2}^{- 1} \left({I}_{G 1}\right) + {a}_{G} cos \left({b}_{G}t\right) = {a}_{G} cos \left({b}_{G}t\right) + {a}_{H} cos \left({b}_{H}t+{φ}_{G}\right) + {a}_{K} cos \left({b}_{K}t+{φ}_{H}\right)$;
the step of obtaining the identification parameters from the K boom section to the G boom section specifically includes:
performing the Fourier transform on the output current *I*_{*G*2} of the G boom section to obtain $F \left({I}_{G 2}\right) = π \left\{\begin{matrix}{a}_{G} \left[δ\left(ω-{b}_{G}\right)+δ\left(ω+{b}_{G}\right)\right] + \\ {a}_{H} \left[{e}^{{jφ}_{G}}δ\left(ω-{b}_{H}\right)+{e}^{- {jφ}_{G}}δ\left(ω+{b}_{H}\right)\right] + {a}_{K} \left[{e}^{{jφ}_{H}}δ\left(ω-{b}_{K}\right)+{e}^{- {jφ}_{H}}\left(ω+{b}_{K}\right)\right]\end{matrix}\right\}$;
obtaining the identification parameters of the K boom section, the H boom section, and the G boom section in sequence as (*a_{G},b_{G}*,0), (*a_{H},b_{H},φ_{G}*), (*a_{K},b_{K},φ_{H}*) according to $F \left({I}_{G 2}\right) = π \left\{\begin{matrix}{a}_{G} \left[δ\left(ω-{b}_{G}\right)+δ\left(ω+{b}_{G}\right)\right] + \\ {a}_{H} \left[{e}^{{jφ}_{G}}δ\left(ω-{b}_{H}\right)+{e}^{- {jφ}_{G}}δ\left(ω+{b}_{H}\right)\right] + {a}_{K} \left[{e}^{{jφ}_{H}}δ\left(ω-{b}_{K}\right)+{e}^{- {jφ}_{H}}\left(ω+{b}_{K}\right)\right]\end{matrix}\right\}$.

The present application also provides a processor, configured to execute the boom identification method.

The present application also provides a boom identification apparatus, for identifying the type and installation sequence of a boom, the boom comprising a plurality of boom sections including a first boom section and an Nth boom section, wherein the boom identification apparatus includes a plurality of boom section identification devices and a controller, the plurality of boom section identification devices being provided on the plurality of boom sections in a one-to-one correspondence, each of the boom section identification devices comprising an identification calculation module, a current input module, and a current output module sequentially connected, and the current input module of an Xth boom section being connected to the current output module of a (X+1)th boom section;
the current output module of the boom section identification device on the Nth boom section is used for using a current component as an output current *I*_{*N*2} of the Nth boom section;
the current input module of the boom section identification device of the Xth boom section other than the Nth boom section is used for receiving an output current *I*_{(X+1)2} of the (X+1)th boom section as an input current *I*_{X1} of the Xth boom section, and the identification calculation module of the boom section identification device of the Xth boom section is used for acquiring the input current *I*_{X1} of the current input module of the boom section identification device of the Xth boom section, and processing the input current *I*_{X1} of the Xth boom section to obtain an output current *I*_{X2} of the Xth boom section;

the controller is used for processing an output current *I*₁₂ of the boom section identification device of the first boom section to obtain identification parameters from the first boom section to the Nth boom section, and the controller is further used for obtaining a current boom section type and a connection relationship of the boom according to the identification parameters of the respective boom sections, and determining whether types and connection relationships of the boom sections of the boom are correct according to the current boom section type and the connection relationship.

In some embodiments, the boom identification apparatus further includes a moment limiter, the moment limiter being used for limiting lifting of the boom when the current boom section type and the connection relationship are incorrect.

In some embodiments, the identification calculation module of the boom section identification device of the Xth boom section other than the Nth boom section is specifically used for receiving the output current *I*_{(X+1)2} of the (X+1)th boom section as the input current *I*_{X1} of the Xth boom section, performing the Fourier transform on the input current *I*_{X1} of the Xth boom section to obtain *F*(*IX*1), phase-shifting a component with zero initial phase in *F*(*I*_{*X*1}) to obtain *F*₂(*I*_{*X*1}), performing an inverse Fourier transform on *F*₂(*I*_{*X*1}) to obtain ${F}_{2}^{- 1} \left({I}_{X 1}\right)$, adding a current component to ${F}_{2}^{- 1} \left({I}_{X 1}\right)$ to obtain *I*_{*X*2}, and using *I*_{X2} as the output current of the Xth boom section.

In some embodiments, when the identification calculation module of the boom section identification device of the Xth boom section other than the Nth boom section phase-shifts a component with zero initial phase in *F*(*I*_{*X*1}) to obtain *F*₂(*I*_{*X*1}), the component with zero initial phase in *F*(*I*_{*X*1}) is phase-shifted to the right by *φ_{X}* to obtain *F*₂(*I*_{*X*1}); when the identification calculation module of the boom section identification device of the Xth boom section other than the Nth boom section adds the current component to ${F}_{2}^{- 1} \left({I}_{X 1}\right)$ to obtain *I*_{X2}, a current component *a_{X}cos*(*b_{X}t*) is added to ${F}_{2}^{- 1} \left({I}_{X 1}\right)$ to obtain ${I}_{X 2} = {F}_{2}^{- 1} \left({I}_{X 1}\right) + {a}_{X} cos \left({b}_{X}t\right) .$.

In some embodiments, the controller is specifically used for performing a Fourier transform on the output current *I*₁₂ of the first boom section to obtain , and obtaining the identification parameters (*a*₁*,b*₁*,*0)*,* (*a*₂*,b*₂,*φ*₁)*,* ... , (*a_{N},b_{N},φ_{N-1}*) of the first boom section to the Nth boom section according to $F \left({I}_{12}\right) = π \left\{\begin{matrix}{a}_{1} \left[δ\left(ω-{b}_{1}\right)+δ\left(ω+{b}_{1}\right)\right] + {a}_{2} \left[{e}^{{jφ}_{1}}δ\left(ω-{b}_{2}\right)+{e}^{- {jφ}_{1}}δ\left(ω+{b}_{2}\right)\right] + \\ ⋯ + {a}_{N} \left[{e}^{{jφ}_{X}}δ\left(ω-{b}_{N}\right)+{e}^{- {jφ}_{X}}δ\left(ω+{b}_{N}\right)\right]\end{matrix}\right\}$.

The present application also provides a boom identification apparatus, for identifying the type and installation sequence of a boom, the boom comprising three sequentially connected boom sections G-H-K, wherein the boom identification apparatus includes a plurality of boom section identification devices and a controller, the plurality of boom section identification devices comprising a G boom section identification device, an H boom section identification device, and a K boom section identification device, the G boom section identification device, the H boom section identification device, and the K boom section identification device being provided on the G boom section, the H boom section, and the K boom section in a one-to-one correspondence, each boom section identification device comprising an identification calculation module, a current input module, and a current output module sequentially connected, and the current output module of the K boom section identification device being connected to the current input module of the H boom section identification device, the current output module of the H boom section identification device being connected to the current input module of the G boom section identification device, and the current output module of the G boom section identification device being connected to the controller;
the identification calculation module of the K boom section identification device is used for obtaining an output current *I*_{*K*2} of the K boom section through data processing;
the current input module of the H boom section identification device is used for receiving the output current *I*_{*K*2} output by the current output module of the K boom section identification device as an input current *I*_{*H*1} of the H boom section, and the identification calculation module of the H boom section identification device is used for processing the input current *I*_{*H*2} of the H boom section to obtain an output current *I_{H2}* of the H boom section;
the current input module of the G boom section identification device is used for receiving the output current *I*_{*H*2} of the H boom section output by the current output module of the H boom section identification device as an input current *I_{G1}* of the G boom section, the identification calculation module of the G boom section identification device is used for processing the input current *I*_{*G*1} of the G boom section to obtain an output current *I*_{*G*2} of the G boom section, and the current output module of the G boom section identification device is used for outputting the output current *I*_{*G*2} of the G boom section to the controller;
the controller is used for processing the output current *I*_{*G*2} output by the current output module of the G boom section identification device to obtain identification parameters from the K boom section to the G boom section, and the controller is further used for obtaining a current boom section type and a connection relationship of the boom according to the identification parameters from the K boom section to the G boom section, and determining whether the types and connection relationships of the boom sections of the boom are correct according to the current boom section type and the connection relationship.

In some embodiments, the identification calculation module of the H boom section identification device is specifically used for receiving the output current *I*_{*K*2} of the K boom section as the input current *I*_{*H*1} of the H boom section, performing a Fourier transform on the input current *I*_{*H*1} of the H boom section to obtain *F*(*I*_{*H*1}*)=π*{*a_{K}*[*δ*(*ω-b_{K})+δ*(*ω+b_{K}*)]}, phase-shifting to the right the component with zero initial phase in *F*(*I*_{*H*1}) by *φ_{H}* to obtain *F*₂(*I*_{*H*1})=*π*{*a_{K}*[*e^{jφH}δ*(*ω-b_{K}*)*+e^{jφH}δ*(*ω+b_{K}*)]}, performing the Fourier transform on *F*₂(*I*_{*H*1}) to obtain ${F}_{2}^{- 1} \left({I}_{H 1}\right) = {a}_{K} cos \left({b}_{K}t+{φ}_{H}\right)$, adding a current component *a_{H}cos*(*b_{H}t*) to ${F}_{2}^{- 1} \left({I}_{H 1}\right)$ to obtain the output current *I*_{*H*2} of the H boom section as ${I}_{H 2} = {F}_{2}^{- 1} \left({I}_{H 1}\right) + {a}_{H} cos \left({b}_{H}t\right) = {a}_{H} cos \left({b}_{H}t\right) + {a}_{K} cos \left({b}_{K}t+{φ}_{H}\right)$;
the identification calculation module of the G boom section identification device is specifically used for receiving the output current *I*_{*H*2} of the H boom section as the input current *I*_{*G*1} of the G boom section, performing a Fourier transform on the input current *I*_{*G*1} of the G boom section to obtain
$F \left({I}_{G 1}\right) = F \left({I}_{H 2}\right) = π \left\{\begin{matrix}{a}_{H} \left[δ\left(ω-{b}_{H}\right)+δ\left(ω+{b}_{H}\right)\right] + \\ {a}_{K} \left[{e}^{{jϕ}_{H}}δ\left(ω-{b}_{K}\right)+{e}^{- {jϕ}_{H}}δ\left(ω+{b}_{K}\right)\right]\end{matrix}\right\}$,phase-shifting to the right the component with zero initial phase in *F*(*I*_{*G*1}) by *φ_{G}* to obtain
$F \left({I}_{G 2}\right) = π \left\{\begin{matrix}{a}_{G} \left[δ\left(ω-{b}_{G}\right)+δ\left(ω+{b}_{G}\right)\right] + \\ {a}_{H} \left[{e}^{{jφ}_{G}}δ\left(ω-{b}_{H}\right)+{e}^{- {jφ}_{G}}δ\left(ω+{b}_{H}\right)\right] + {a}_{K} \left[{e}^{{jφ}_{H}}δ\left(ω-{b}_{K}\right)+{e}^{- {jφ}_{H}}\left(ω+{b}_{K}\right)\right]\end{matrix}\right\}$, performing the Fourier transform on *F*₂(*I*_{*G*1}) to obtain ${F}_{2}^{- 1} \left({I}_{G 1}\right) = {a}_{H} cos \left({b}_{H}t+{φ}_{G}\right) + {a}_{K} cos \left({b}_{K}t+{φ}_{H}\right)$, adding a current component *a_{G}*cos(*b_{G}t*) to ${F}_{2}^{- 1} \left({I}_{G 1}\right)$ to obtain the output current *I_{G2}* of the G boom section as ${I}_{G 2} = {F}_{2}^{- 1} \left({I}_{G 1}\right) + {a}_{G} cos \left({b}_{G}t\right) = {a}_{G} cos \left({b}_{G}t\right) + {a}_{H} cos \left({b}_{H}t+{φ}_{G}\right) + {a}_{K} cos \left({b}_{K}t+{φ}_{H}\right)$;
the controller is specifically used for performing the Fourier transform on the output current *I*_{*G*2} of the G boom section to obtain $F \left({I}_{G 2}\right) = π \left\{\begin{matrix}{a}_{G} \left[δ\left(ω-{b}_{G}\right)+δ\left(ω+{b}_{G}\right)\right] + \\ {a}_{H} \left[{e}^{{jφ}_{G}}δ\left(ω-{b}_{H}\right)+{e}^{- {jφ}_{G}}δ\left(ω+{b}_{H}\right)\right] + {a}_{K} \left[{e}^{{jφ}_{H}}δ\left(ω-{b}_{K}\right)+{e}^{- {jφ}_{H}}\left(ω+{b}_{K}\right)\right]\end{matrix}\right\}$;
obtaining the identification parameters of the K boom section, the H boom section, and the G boom section in sequence as (*a_{G},b_{G}*,0), (*a_{H},b_{H},φ_{G}*), (*a_{K},b_{K},φ_{H}*) according to $F \left({I}_{G 2}\right) = π \left\{\begin{matrix}{a}_{G} \left[δ\left(ω-{b}_{G}\right)+δ\left(ω+{b}_{G}\right)\right] + \\ {a}_{H} \left[{e}^{{jφ}_{G}}δ\left(ω-{b}_{H}\right)+{e}^{- {jφ}_{G}}δ\left(ω+{b}_{H}\right)\right] + {a}_{K} \left[{e}^{{jφ}_{H}}δ\left(ω-{b}_{K}\right)+{e}^{- {jφ}_{H}}\left(ω+{b}_{K}\right)\right]\end{matrix}\right\}$*.*
the present application also provides a computer-readable storage medium, wherein a computer program is stored on the computer-readable storage medium, and when the computer program is executed by a processor, the steps of the method are executed.

### Advantageous Effects

In the boom identification method, the processor, the boom identification apparatus, and the computer-readable storage medium of the present application, both the boom section type and the connection sequence relationship of the boom sections can be identified, ensuring that the boom adopts correct boom section types and is connected in a correct sequence, thereby reducing safety accidents caused by incorrect identification of boom sections, and thus reducing casualties and property loss.

### BRIEF DESCRIPTION OF THE DRAWINGS

In order to explain the technical solutions of the embodiments of the present application more clearly, a brief introduction to the drawings to be used in the embodiments will be given below. It should be understood that the following drawings merely show some embodiments of the present application, and therefore should not be regarded as limiting the scope. For a person of ordinary skill in the art, other related drawings may also be obtained from these drawings without inventive effort.
FIG. 1 is a schematic flowchart of a boom identification method according to an embodiment of the present application.
FIG. 2 is a schematic structural diagram of a boom identification apparatus according to an embodiment of the present application.
FIG. 3 is a schematic structural diagram of a boom identification apparatus according to another embodiment of the present application.
FIG. 4 is a schematic structural diagram of a computer device according to an embodiment of the present application.
FIG. 5 is a schematic structural diagram of a computer device according to another embodiment of the present application.

### DETAILED DESCRIPTION

The specific embodiments of the present application will be described in detail below in conjunction with the drawings. It is obvious that the described embodiments are merely a part of the embodiments of the present application, rather than all of the embodiments. Based on the description of the present application, all other embodiments obtained by a person of ordinary skill in the art without making inventive efforts shall fall within the protection scope of the present application.

In the description of the present application, unless otherwise expressly specified and limited, the terms "set", "install", "connect", and the like should be understood in a broad sense. For example, it may be a fixed connection, a detachable connection, or an integrated connection; it may be a mechanical connection or an electrical connection; it may be a direct connection or an indirect connection through an intermediate medium. For a person of ordinary skill in the art, the specific meanings of the above terms may be understood according to specific circumstances.

The terms "first", "second", "third", and the like are merely used to distinguish numerical values or elements with similar attributes, rather than indicating or implying relative importance or a specific sequence.

The terms "comprise", "include", or any other variant thereof are intended to cover an non-exclusive inclusion, such that a process, method, article, or apparatus that comprises a list of elements not only includes those elements but also may include other elements not expressly listed.

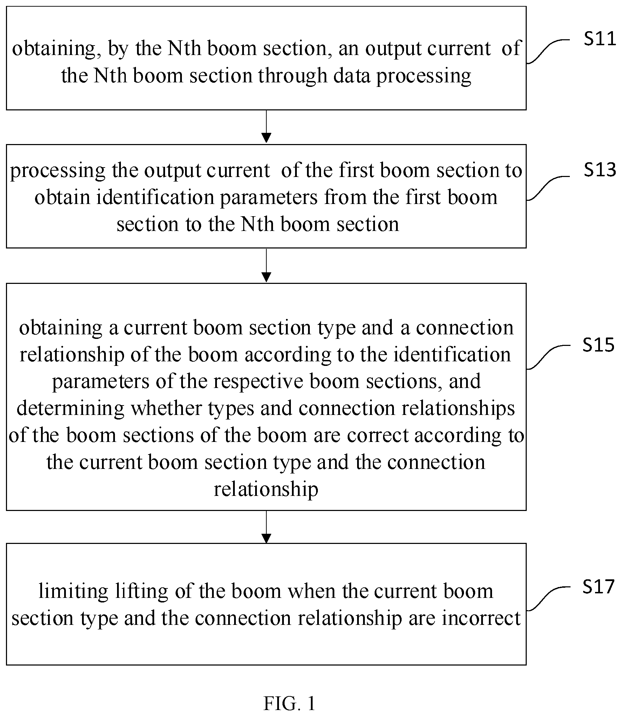

An embodiment of the present application provides a boom identification method for identifying the type and installation sequence of a boom, the boom including N sequentially connected boom sections, each boom section having a built-in identification parameter (*a_{X},b_{X}*,*φ_{X}*), wherein parameters *a_{X}* and *b_{X}* are mapped to the type of the corresponding boom section, and a parameter *φ_{X}* characterizes a connection relationship between the boom section and a subsequent boom section. Please refer to FIG. 1. An embodiment of the boom identification method includes:
S11, obtaining, by the Nth boom section (i.e., the last boom section), an output current *I*_{*N*2} of the Nth boom section through data processing; for the (N-1)th boom section to the first boom section, the Xth boom section receives an output current *I*_{(X+1)2} of the (X+1)th boom section (i.e., the preceding boom section) as an input current *I*_{X1} of the Xth boom section, and processes the input current *I*_{X1} to obtain an output current *I*_{X2} of the Xth boom section. Wherein, X is a positive integer greater than or equal to 1. It can be understood that the first boom section may be a boom section connected to the body of a crane or other construction machinery, or may be a boom section far from the body of the crane or other construction machinery (i.e., the end boom section). That is to say, from the first boom section to the Nth boom section may refer to from the boom section connected to the body of the crane to the end boom section, or conversely, from the end boom section to the boom section connected to the body of the crane.

S13, processing the output current *I*₁₂ of the first boom section to obtain identification parameters from the first boom section to the Nth boom section in sequence as (*a*₁*,b*₁*,*0), (*a*₂*,b*₂*,φ*₁), ..., (*a_{N},b_{N},φ*_{*N*-1}).

S15, obtaining a current boom section type and a connection relationship of the boom according to the identification parameters (*a*₁*,b*₁*,*0), (*a*₂*,b*₂*,φ*₁), ..., (*a_{N},b_{N},φ*_{*N*-1}) of the respective boom sections, and determining whether types and connection relationships of the boom sections of the boom are correct according to the current boom section type and the connection relationship.

In the boom identification method of this embodiment, both the boom section type and the connection sequence relationship of the boom sections can be identified, ensuring that the boom adopts correct boom section types and is connected in a correct sequence, thereby reducing safety accidents caused by incorrect identification of boom sections, and thus reducing casualties and property loss.

In this embodiment, the boom identification method further includes:
S17, limiting lifting of the boom when the current boom section type and the connection relationship are incorrect. Wherein, a prompt message may be sent to a moment limiter when the current boom section type and the connection relationship are incorrect, and the moment limiter limits lifting of the boom. Wherein, the moment limiter may prompt that there is a problem with the boom installation.

In this embodiment, in step S11,
for the Nth boom section, a current component *a_{N}*cos(*b_{N}t*) is used as the output current *I*_{*N*2} of the Nth boom section; it can be understood that the current component may also be *a_{N}*sin(*b_{N}t*).

For the (N-1)th boom section to the first boom section, step S11 includes:
S111, receiving the output current *I*_{(X+1)2} of the (X+1)th boom section as the input current *I*_{X1} of the Xth boom section.
S112, performing a Fourier transform on the input current *I*_{*X*1} to obtain *F*(*I*_{*X*1}).
S113, phase-shifting to the left or right the component with zero initial phase in *F*(*I*_{*X*1}) by *φ_{X}* to obtain *F*₂(*I*_{*X*1}).
S114, performing an inverse Fourier transform on *F*₂*F*(*I*_{*X*1}) to obtain ${F}_{2}^{- 1} \left({I}_{X 1}\right)$.
S115, adding a current component *a_{X}*cos(*b_{X}t*) to ${F}_{2}^{- 1} \left({I}_{X 1}\right)$ to obtain ${I}_{X 2} = {F}_{2}^{- 1} \left({I}_{X 1}\right) + {a}_{X} cos \left({b}_{X}t\right)$. It can be understood that the current component added may also be *a_{X}sin*(*b_{X}t*), and the corresponding ${I}_{X 2} = {F}_{2}^{- 1} \left({I}_{X 1}\right) + {a}_{X} sin \left({b}_{X}t\right)$.
S116, using *I*_{X2} as the output current of the Xth boom section.

In this embodiment, step S13 specifically includes:
S131, performing the Fourier transform on the output current *I*₁₂ of the first boom section to obtain $F \left({I}_{12}\right) = π \left\{\begin{matrix}{a}_{1} \left[δ\left(ω-{b}_{1}\right)+δ\left(ω+{b}_{1}\right)\right] + \\ {a}_{2} \left[{e}^{{jϕ}_{1}}δ\left(ω-{b}_{2}\right)+{e}^{- {jϕ}_{1}}δ\left(ω+{b}_{2}\right)\right] + \\ ⋯ + {a}_{N} \left[{e}^{{jϕ}_{X}}δ\left(ω-{b}_{N}\right)+{e}^{- {jϕ}_{X}}δ\left(ω+{b}_{N}\right)\right]\end{matrix}\right\}$.
S133, obtaining the identification parameters (*a*₁*,b*₁*,*0), (*a*₂*,b*₂*,φ*₁), ... , (*a_{N},b_{N},φ*_{*N*-1}) of the first boom section to the Nth boom section according to $F \left({I}_{12}\right) = π \left\{\begin{matrix}{a}_{1} \left[δ\left(ω-{b}_{1}\right)+δ\left(ω+{b}_{1}\right)\right] + \\ {a}_{2} \left[{e}^{{jϕ}_{1}}δ\left(ω-{b}_{2}\right)+{e}^{- {jϕ}_{1}}δ\left(ω+{b}_{2}\right)\right] + \\ ⋯ + {a}_{N} \left[{e}^{{jϕ}_{X}}δ\left(ω-{b}_{N}\right)+{e}^{- {jϕ}_{X}}δ\left(ω+{b}_{N}\right)\right]\end{matrix}\right\}$.

In a specific embodiment, the boom may include three boom sections A, B, and C, and the correct installation sequence is A-B-C. When the boom actually includes three sequentially connected boom sections G-H-K, wherein the K boom section is the Nth boom section (i.e. the third boom section), the H boom section is the middle boom section, and the G boom section is the first boom section, the above boom identification method may be adopted to identify whether the types and connection sequence of the three boom sections G-H-K of the boom are correct.

Wherein, in step S11, the K boom section obtains an output current *I*_{*K*2} of the K boom section through data processing, the H boom section receives the output current *I*_{*K*2} of the K boom section as an input current *I*_{*H*1} of the H boom section, and processes the input current *I*_{*H*1} to obtain an output current *I*_{*H*2} of the H boom section, the G boom section receives the output current *I*_{*H*2} of the H boom section as an input current *I*_{*G*1} of the G boom section, and processes the input current IG1 to obtain an output current *I*_{*G*2} of the G boom section.

Wherein, in step S13, the output current *I_{G2}* of the G boom section is processed to obtain identification parameters from the K boom section to the G boom section in sequence as (*a_{G},b_{G},*0), (*a_{H},b_{H},φ_{G}*), (*a_{K},b_{K},φ_{H}*).

Wherein, in step S15, a current boom section type and a connection relationship of the boom are obtained according to the identification parameters (*a_{G},b_{G},*0), (*a_{H},b_{H},φ_{G}*), (*a_{K},b_{K},φ_{H}*) from the K boom section to the G boom section, and it is determined whether the types of the three boom sections A, B, and C of the boom and the correct installation sequence A-B-C are consistent according to the current boom section type and the connection relationship, thereby determining whether the types and the connection relationships of the boom sections of the boom are correct.

In step S11,
the K boom section obtains the output current *I*_{*K*2} of the K boom section as *I*_{*K*2} = *a_{K}* cos(*b_{K}t*) through data processing; it can be understood that the output current of the K boom section may also be *a_{K}*sin(*b_{K}t*)*.*
receiving the output current *I*_{*K*2} of the K boom section as the input current *I*_{*H*1} of the H boom section;
performing the Fourier transform on the input current *I*_{*H*1} to obtain *F*(*I*_{*H*1})=*π*{*a_{K}*[*δ*(*ω-b_{K}*)+*δ*(*ω+b_{K}*)]};
phase-shifting to the right the component with zero initial phase in *F*(*I*_{*H*1}) by *φ_{H}* to obtain *F*₂(*I*_{*H*1})=*π*{*a_{K}*[*e^{jφH}δ*(*ω-b_{K}*)*+e^{jφH}δ*(*ω+b_{K}*)]}; it can be understood that this may also be phase-shifted to the left by *φ_{H}*.
performing the Fourier transform on *F*₂(*I*_{*H*1}) to obtain ${F}_{2}^{- 1} \left({I}_{H 1}\right) = {a}_{K} cos \left({b}_{K}t+{φ}_{H}\right)$;
adding a current component *a_{H}*cos(*b_{H}t*) to ${F}_{2}^{- 1} \left({I}_{H 1}\right)$ to obtain the output current *I*_{*H*2} of the H boom section as ${I}_{H 2} = {F}_{2}^{- 1} \left({I}_{H 1}\right) + {a}_{H} cos \left({b}_{H}t\right) = {a}_{H} cos \left({b}_{H}t\right) + {a}_{K} cos \left({b}_{K}t+{φ}_{H}\right)$; it can be understood that the current component added may also be *a_{H}*sin(*b_{H}t*).
receiving the output current *I*_{*H*2} of the H boom section as the input current *I*_{*G*1} of the G boom section;
performing a Fourier transform on the input current *I*_{*G*1} to obtain $F \left({I}_{G 1}\right) = F \left({I}_{H 2}\right) = π \left\{\begin{matrix}{a}_{H} \left[δ\left(ω-{b}_{H}\right)+δ\left(ω+{b}_{H}\right)\right] + \\ {a}_{K} \left[{e}^{{jϕ}_{H}}δ\left(ω-{b}_{K}\right)+{e}^{- {jϕ}_{H}}δ\left(ω+{b}_{K}\right)\right]\end{matrix}\right\}$;
phase-shifting to the right the component with zero initial phase in *F*(*I*_{*G*1}) by *φ_{G}* to obtain ${F}_{2} \left({I}_{G 1}\right) = π \left\{\begin{matrix}{a}_{H} \left[{e}^{{jϕ}_{G}}δ\left(ω-{b}_{H}\right)+{e}^{- {jϕ}_{G}}δ\left(ω+{b}_{H}\right)\right] + \\ {a}_{K} \left[{e}^{{jϕ}_{H}}δ\left(ω-{b}_{K}\right)+{e}^{- {jϕ}_{H}}δ\left(ω+{b}_{K}\right)\right]\end{matrix}\right\}$; it can be understood that this may also be phase-shifted to the left by *φ_{G}*.
performing the Fourier transform on *F*₂(*I*_{*G*1}) to obtain ${F}_{2}^{- 1} \left({I}_{G 1}\right) = {a}_{H} cos \left({b}_{H}t+{φ}_{G}\right) + {a}_{K} cos \left({b}_{K}t+{φ}_{H}\right)$;
adding a current component *a_{G}*cos(*b_{G}t*) to ${F}_{2}^{- 1} \left({I}_{G 1}\right)$ to obtain the output current *I*_{*G*2} of the G boom section as $\begin{matrix}{I}_{G 2} = {F}_{2}^{- 1} \left({I}_{G 1}\right) + {a}_{G} cos \left({b}_{G}t\right) = {a}_{G} cos \left({b}_{G}t\right) + {a}_{H} cos \left({b}_{H}t+{ϕ}_{G}\right) \\ + {a}_{K} cos \left({b}_{K}t+{ϕ}_{H}\right)\end{matrix}$. It can be understood that the current component added may also be *a_{G}*sin(*b_{G}t*).

Wherein, step S13 includes:
performing a Fourier transform on the output current *I*_{*G*2} of the G boom section to obtain $F \left({I}_{G 2}\right) = π \left\{\begin{matrix}{a}_{G} \left[δ\left(ω-{b}_{G}\right)+δ\left(ω+{b}_{G}\right)\right] + \\ {a}_{H} \left[{e}^{{jϕ}_{G}}δ\left(ω-{b}_{H}\right)+{e}^{- {jϕ}_{G}}δ\left(ω+{b}_{H}\right)\right] + \\ {a}_{K} \left[{e}^{{jϕ}_{H}}δ\left(ω-{b}_{K}\right)+{e}^{- {jϕ}_{H}}δ\left(ω+{b}_{K}\right)\right]\end{matrix}\right\}$;
obtaining the identification parameters of the K boom section, the H boom section, and the G boom section in sequence as (*a_{G},b_{G},*0), (*a_{H},b_{H},φ_{G}*), (*a_{K},b_{K},φ_{H}*) according to $F \left({I}_{G 2}\right) = π \left\{\begin{matrix}{a}_{G} \left[δ\left(ω-{b}_{G}\right)+δ\left(ω+{b}_{G}\right)\right] + \\ {a}_{H} \left[{e}^{{jϕ}_{G}}δ\left(ω-{b}_{H}\right)+{e}^{- {jϕ}_{G}}δ\left(ω+{b}_{H}\right)\right] + \\ {a}_{K} \left[{e}^{{jϕ}_{H}}δ\left(ω-{b}_{K}\right)+{e}^{- {jϕ}_{H}}δ\left(ω+{b}_{K}\right)\right]\end{matrix}\right\}$.

Wherein, in step S15, (*a_{G},b_{G},*0), (*a_{H},b_{H},φ_{G}*), (*a_{K},b_{K},φ_{H}*) and (*a_{A},b_{A},*0), (*a_{B},b_{B},φ_{A}*), (*a_{C},b_{C},φ_{B}*) are compared, and it is determined whether the types and the connection relationships of the boom sections of the boom are correct.

An embodiment of the present application provides a processor configured to execute the above boom identification method.

In the processor of this embodiment, both the boom section type and the connection sequence relationship of the boom sections can be identified, ensuring that the boom adopts correct boom section types and is connected in a correct sequence, thereby reducing safety accidents caused by incorrect identification of boom sections, and thus reducing casualties and property loss.

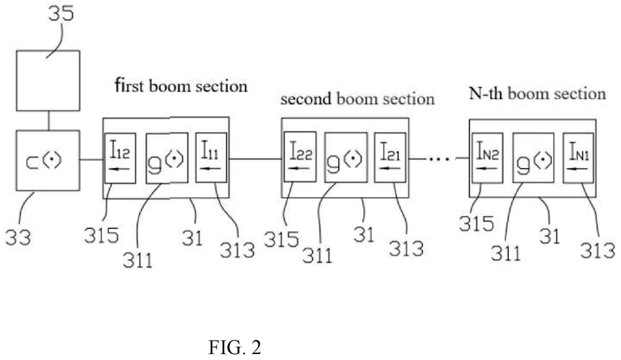

The present application further provides a boom identification apparatus for identifying the type and installation sequence of a boom, the boom including a plurality of boom sections including a first boom section and an Nth boom section (wherein, the number of boom sections of the boom may be two or more), the Nth boom section being the last boom section. Please refer to FIG. 2. An embodiment of the boom identification apparatus includes:
a plurality of boom section identification devices 31 and a controller 33, the plurality of boom section identification devices 31 being provided on the plurality of boom sections in a one-to-one correspondence, each boom section identification device 31 including an identification calculation module 311, a current input module 313, and a current output module 315 sequentially connected, and the current input module 313 of the Xth boom section being connected to the current output module 315 of the (X+1)th boom section. The current output module 315 of the boom section identification device 31 on the Nth boom section is used for using a current component *a_{N}*cos(*b_{N}t*) as the output current *IN*₂. The current input module 313 of the boom section identification device of the Xth boom section other than the Nth boom section is used for receiving the output current *I*_{(X+1)2} of the (X+1)th boom section as the input current *I*_{X1} of the Xth boom section, and the identification calculation module 311 of the boom section identification device of the Xth boom section is used for acquiring the input current *I*_{X1} of the current input module 313 of the boom section identification device of the Xth boom section, and processing the input current *I*_{X1} to obtain the output current *I*_{*X*2} of the Xth boom section. The controller 33 is used for processing the output current *I*₁₂ of the boom section identification device 31 of the first boom section to obtain identification parameters from the first boom section to the Nth boom section in sequence as (*a*₁*,b*₁*,*0), (*a*₂*,b*₂*,φ*₁) ,..., (*a_{N},b_{N},φ*_{*N*-1}). The controller 33 is further used for obtaining a current boom section type and a connection relationship of the boom according to the identification parameters (*a*₁*,b*₁*,*0), (*a*₂*,b*₂*,φ*₁) ,..., (*a_{N},b_{N},φ*_{*N*-1}) of the respective boom sections, and determining whether the types and the connection relationships of the boom sections of the boom are correct according to the current boom section type and the connection relationship. It can be understood that the identification calculation module 311, the current input module 313, and the current output module 315 of each boom section identification device may be integrated into an overall module, or the identification calculation module 311 may be integrated into the current input module 313 or the current output module 315, or the current input module 313 and the current output module 315 may be integrated into an overall module.

In the boom identification apparatus of this embodiment, both the boom section type and the connection sequence relationship of the boom sections can be identified, ensuring that the boom adopts correct boom section types and is connected in a correct sequence, thereby reducing safety accidents caused by incorrect identification of boom sections, and thus reducing casualties and property loss.

In this embodiment, the boom identification apparatus further includes a moment limiter 35, the moment limiter 35 being used for limiting lifting of the boom when the current boom section type and the connection relationship are incorrect.

In this embodiment, the identification calculation module 311 of the boom section identification device of the Xth boom section other than the Nth boom section is specifically used for receiving the output current *I*_{(X+1)2} of the (X+1)th boom section as the input current *I*_{X1} of the Xth boom section, performing a Fourier transform on the input current *I*_{X1} of the Xth boom section to obtain *F*(*I*_{X1}), phase-shifting to the left or right the component with zero initial phase in *F*(*I*_{X1}) by *φ_{X}* to obtain *F*₂(*I*_{X1}), performing an inverse Fourier transform on *F*₂(*I*_{X1}) to obtain ${F}_{2}^{- 1} \left({I}_{X 1}\right)$, adding a current component *a_{X}*cos(*b_{X}t*) to ${F}_{2}^{- 1} \left({I}_{X 1}\right)$ to obtain ${I}_{X 2} = {F}_{2}^{- 1} \left({I}_{X 1}\right) + {a}_{X} cos \left({b}_{X}t\right)$, and using *I*_{X2} as the output current of the Xth boom section. It can be understood that the current component added may also be *a_{X}sin*(*b_{X}t*).

In this embodiment, the controller 33 is specifically used for performing a Fourier transform on the output current *I*₁₂ of the first boom section to obtain $F \left({I}_{12}\right) = π \left\{\begin{matrix}{a}_{1} \left[δ\left(ω-{b}_{1}\right)+δ\left(ω+{b}_{1}\right)\right] + \\ {a}_{2} \left[{e}^{{jϕ}_{1}}δ\left(ω-{b}_{2}\right)+{e}^{- {jϕ}_{1}}δ\left(ω+{b}_{2}\right)\right] + \\ ⋯ + {a}_{N} \left[{e}^{{jϕ}_{X}}δ\left(ω-{b}_{N}\right)+{e}^{- {jϕ}_{X}}δ\left(ω+{b}_{N}\right)\right]\end{matrix}\right\}$, and obtaining the identification parameters (*a*₁*,b*₁*,*0), (*a*₂*,b*₂*,φ*₁) ,..., (*a_{N},b_{N},φ*_{*N*-1}) of the first boom section to the Nth boom section according to $F \left({I}_{12}\right) = π \left\{\begin{matrix}{a}_{1} \left[δ\left(ω-{b}_{1}\right)+δ\left(ω+{b}_{1}\right)\right] + \\ {a}_{2} \left[{e}^{{jϕ}_{1}}δ\left(ω-{b}_{2}\right)+{e}^{- {jϕ}_{1}}δ\left(ω+{b}_{2}\right)\right] + \\ ⋯ + {a}_{N} \left[{e}^{{jϕ}_{X}}δ\left(ω-{b}_{N}\right)+{e}^{- {jϕ}_{X}}δ\left(ω+{b}_{N}\right)\right]\end{matrix}\right\}$.

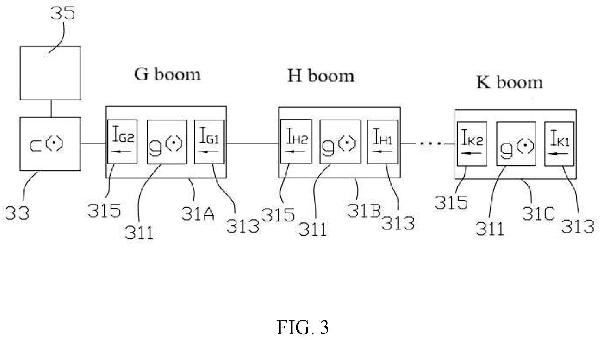

In an embodiment, the boom includes three sequentially connected boom sections G-H-K. Please refer to FIG. 3. An embodiment of the boom identification apparatus includes:
a plurality of boom section identification devices and a controller 33, the plurality of boom section identification devices including a G boom section identification device 31A, an H boom section identification device 31B, and a K boom section identification device 31C, the G boom section identification device 31A, the H boom section identification device 31B, and the K boom section identification device 31C being provided on the G boom section, the H boom section, and the K boom section in a one-to-one correspondence, each boom section identification device including an identification calculation module 311, a current input module 313, and a current output module 315 sequentially connected, and the current output module 315 of the K boom section identification device 31C being connected to the current input module 313 of the H boom section identification device 31B, the current output module 315 of the H boom section identification device 31B being connected to the current input module 313 of the G boom section identification device 31A, and the current output module 315 of the G boom section identification device 31A being connected to the controller 33. The identification calculation module 311 of the K boom section identification device 31C is used for obtaining an output current *I*_{*K*2} of the K boom section as *I*_{*K*2} *= a_{K}*cos(*b_{K}t*) through data processing. The current input module 313 of the H boom section identification device 31B is used for receiving the output current *I*_{*K*2} output by the current output module 315 of the K boom section identification device 31C as an input current *I*_{*H*1} of the H boom section, and the identification calculation module 311 of the H boom section identification device 31B is used for processing the input current *I*_{*H*1} to obtain an output current *I*_{*H*2} of the H boom section. The current input module 313 of the G boom section identification device 31A is used for receiving the output current *I*_{*H*2} of the H boom section output by the current output module 315 of the H boom section identification device 31B as an input current *I*_{*G*1} of the G boom section, the identification calculation module 311 of the G boom section identification device 31A is used for processing the input current *I*_{*G*1} to obtain an output current *I*_{*G*2} of the G boom section, and the current output module 315 of the G boom section identification device 31A is used for outputting the output current *I*_{*G*2} of the G boom section to the controller 33. The controller 33 is used for processing the output current *I*_{*G*2} output by the current output module 315 of the G boom section identification device 31A to obtain identification parameters from the K boom section to the G boom section in sequence as (*a_{G},b_{G},*0), (*a_{H},b_{H},φ_{G}*), (*a_{K},b_{K},φ_{H}*). The controller 33 is further used for obtaining a current boom section type and a connection relationship of the boom according to the identification parameters (*a_{G},b_{G},*0), (*a_{H},b_{H},φ_{G}*), (*a_{K},b_{K},φ_{H}*) from the K boom section to the G boom section, and determining whether the types and the connection relationships of the boom sections of the boom are correct according to the current boom section type and the connection relationship.

Wherein, the identification calculation module 311 of the H boom section identification device 31B is specifically used for receiving the output current *I*_{*K*2} of the K boom section as the input current *I*_{*H*1} of the H boom section, performing a Fourier transform on the input current *I*_{*H*1} of the H boom section to obtain *F*(*I*_{*H*1})=*π*{*a_{K}*[*δ*(*ω-b_{K}*)+*δ*(*ω+b_{K}*)]}, phase-shifting to the right the component with zero initial phase in *F*(*I*_{*H*1}) by *φ_{H}* to obtain *F*₂(*I*_{*H*1})=*π*{*a_{K}*[*e^{jφH}δ*(*ω-b_{K}*)*+e^{jφH}δ*(*ω+b_{K}*)]}, performing the Fourier transform on *F*₂(*I*_{*H*1}) to obtain ${F}_{2}^{- 1} \left({I}_{H 1}\right) = {a}_{K} cos \left({b}_{K}t+{φ}_{H}\right)$, adding a current component *a_{H}*cos(*b_{H}t*) to ${F}_{2}^{- 1} \left({I}_{H 1}\right)$ to obtain the output current *I*_{*H*2} of the H boom section as ${I}_{H 2} = {F}_{2}^{- 1} \left({I}_{H 1}\right) + {a}_{H} cos \left({b}_{H}t\right) = {a}_{H} cos \left({b}_{H}t\right) + {a}_{K} cos \left({b}_{K}t+{φ}_{H}\right)$; it can be understood that this may also be phase-shifted to the left by *φ_{H}*. It can be understood that the current component added may also be *a_{H}* sin(*b_{H}t*).

Wherein, the identification calculation module 311 of the G boom section identification device 31A is specifically used for receiving the output current *I*_{*H*2} of the H boom section as the input current *I*_{G1} of the G boom section, performing a Fourier transform on the input current *I*_{G1} of the G boom section to obtain $F \left({I}_{G 1}\right) = F \left({I}_{H 2}\right) = π \left\{\begin{matrix}{a}_{H} \left[δ\left(ω-{b}_{H}\right)+δ\left(ω+{b}_{H}\right)\right] + \\ {a}_{K} \left[{e}^{{jϕ}_{H}}δ\left(ω-{b}_{K}\right)+{e}^{- {jϕ}_{H}}δ\left(ω+{b}_{K}\right)\right]\end{matrix}\right\}$, phase-shifting to the right the component with zero initial phase in *F*(*I*_{*G*1}) by *φ_{G}* to obtain ${F}_{2} \left({I}_{G 1}\right) = π \left\{\begin{matrix}{a}_{H} \left[{e}^{{jϕ}_{G}}δ\left(ω-{b}_{H}\right)+{e}^{- {jϕ}_{G}}δ\left(ω+{b}_{H}\right)\right] + \\ {a}_{K} \left[{e}^{{jϕ}_{H}}δ\left(ω-{b}_{K}\right)+{e}^{- {jϕ}_{H}}δ\left(ω+{b}_{K}\right)\right]\end{matrix}\right\}$, performing the Fourier transform on *F*₂(*I*_{*G*1}) to obtain ${F}_{2}^{- 1} \left({I}_{G 1}\right) = {a}_{H} cos \left({b}_{H}t+{φ}_{G}\right) + {a}_{K} cos \left({b}_{K}t+{φ}_{H}\right)$, adding a current component *a_{G}*cos(*b_{G}t*) tₒ ${F}_{2}^{- 1} \left({I}_{G 1}\right)$ to obtain the output current *I*_{*G*2} of the G boom section as ${I}_{G 2} = {F}_{2}^{- 1} \left({I}_{G 1}\right) + {a}_{G} cos \left({b}_{G}t\right) = {a}_{G} cos \left({b}_{G}t\right) + {a}_{H} cos \left({b}_{H}t+{ϕ}_{G}\right) as + {a}_{K} cos \left({b}_{K}t+{ϕ}_{H}\right)$. It can be understood that this may also be phase-shifted to the left by *φ_{G}.* It can be understood that the current component added may also be *a_{G}*sin(*b_{G}t*).

Wherein, the controller 33 is specifically used for performing a Fourier transform on the output current *I*_{G2} of the G boom section to obtain $F \left({I}_{G 2}\right) = π \left\{\begin{matrix}{a}_{G} \left[δ\left(ω-{b}_{G}\right)+δ\left(ω+{b}_{G}\right)\right] + \\ {a}_{H} \left[{e}^{{jϕ}_{G}}δ\left(ω-{b}_{H}\right)+{e}^{- {jϕ}_{G}}δ\left(ω+{b}_{H}\right)\right] + \\ {a}_{K} \left[{e}^{{jϕ}_{H}}δ\left(ω-{b}_{K}\right)+{e}^{- {jϕ}_{H}}δ\left(ω+{b}_{K}\right)\right]\end{matrix}\right\}$;
obtaining the identification parameters of the K boom section, the H boom section, and the G boom section in sequence as (*a_{G}*,*b_{G}*0),(*a_{H}*,*b_{H}*,*φ_{G}*),(*a_{K}*,*b_{K}*,*φ_{H}*) according to $F \left({I}_{G 2}\right) = π \left\{\begin{matrix}{a}_{G} \left[δ\left(ω-{b}_{G}\right)+δ\left(ω+{b}_{G}\right)\right] + \\ {a}_{H} \left[{e}^{{jϕ}_{G}}δ\left(ω-{b}_{H}\right)+{e}^{- {jϕ}_{G}}δ\left(ω+{b}_{H}\right)\right] + \\ {a}_{K} \left[{e}^{{jϕ}_{H}}δ\left(ω-{b}_{K}\right)+{e}^{- {jϕ}_{H}}δ\left(ω+{b}_{K}\right)\right]\end{matrix}\right\}$.

In this embodiment, the boom identification apparatus further includes a moment limiter 35, the moment limiter 35 being used for limiting lifting of the boom when the current boom section type and the connection relationship are incorrect.

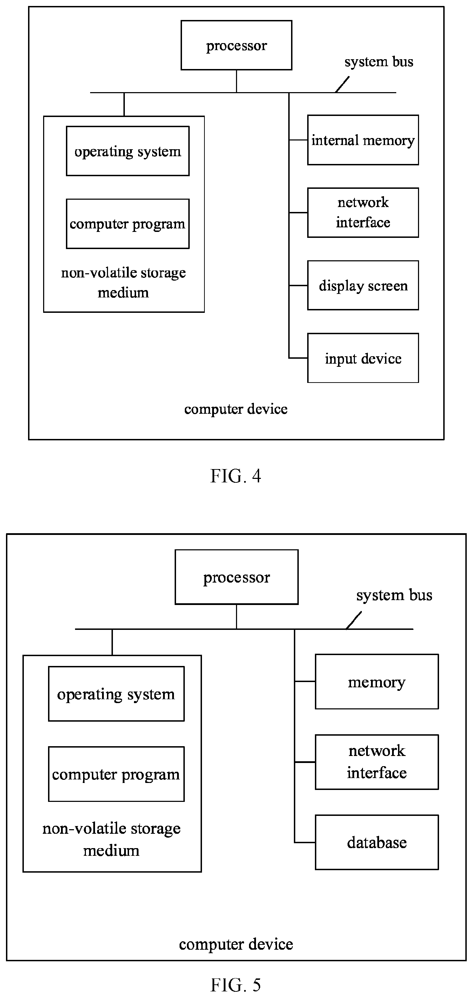

In an embodiment, a computer device is provided. The computer device may be a terminal, and its internal structure diagram may be as shown in FIG. 4. The computer device includes a processor, a memory, a Network interface, a display screen, and an input device connected via a system bus. Wherein, the processor of the computer device is used for providing computing and control capabilities. The memory of the computer device includes an non-volatile storage medium and an internal memory. The non-volatile storage medium stores an operating system and computer-readable instructions. The internal memory provides an operating environment for the operating system and the computer-readable instructions in the non-volatile storage medium. The network interface of the computer device is used for communicating with an external terminal via a Network connection. The computer-readable instructions, when executed by the processor, implement a boom identification method. The display screen of the computer device may be a liquid crystal display screen or an electronic ink display screen, and the input device of the computer device may be a touch layer overlaid on the display screen, or may be keys, a trackball, or a touchpad provided on the housing of the computer device, or may be an external keyboard, touchpad, or mouse.

In an embodiment, a computer device is provided. The computer device may be a server, and its internal structure diagram may be as shown in FIG. 5. The computer device includes a processor, a memory, a Network interface, and a database connected via a system bus. Wherein, the processor of the computer device is used for providing computing and control capabilities. The memory of the computer device includes an non-volatile storage medium and an internal memory. The non-volatile storage medium stores an operating system, computer-readable instructions, and a database. The internal memory provides an operating environment for the operating system and the computer-readable instructions in the non-volatile storage medium. The database of the computer device is used for storing usage data and device configuration item data. The network interface of the computer device is used for communicating with an external terminal via a Network connection. The computer-readable instructions, when executed by the processor, implement a boom identification method.

A person skilled in the art may understand that the structures shown in FIG. 4 or FIG. 5 are merely block diagrams of partial structures related to the solution of the present application, and do not constitute a limitation on the computer device to which the solution of the present application is applied. The specific computer device may include more or fewer components than those shown in the figures, or may combine certain components, or may have different component arrangements.

In an embodiment, a computer device is further provided, including at least one processor and at least one memory, wherein computer-readable instructions are stored on the memory; when the computer-readable instructions are executed by the processor, the computer device implements the steps in the above method embodiments.

In an embodiment, a computer-readable storage medium is provided, computer-readable instructions being stored thereon, and when the computer-readable instructions are executed by one or more processors, the one or more processors implement the steps in the above method embodiments.

In an embodiment, a computer program product or a computer program is provided, the computer program product or computer program including computer-readable instructions, the computer-readable instructions being stored in a computer-readable storage medium. The processor of the computer device reads the computer-readable instructions from the computer-readable storage medium, and executes the computer-readable instructions, so that the computer device executes the steps in the above method embodiments.

A person of ordinary skill in the art may understand that all or part of the processes in the methods of the above embodiments may be completed by instructing relevant hardware by means of computer-readable instructions, and the computer-readable instructions may be stored in an non-volatile computer-readable storage medium. When the computer-readable instructions are executed, the processes of the embodiments of the above methods may be included. Wherein, any reference to a memory, storage, database, or other medium used in the various embodiments provided by the present application may include non-volatile and/or volatile memory. Non-volatile memory may include read-only memory (ROM), programmable ROM (PROM), electrically programmable ROM (EPROM), electrically erasable programmable ROM (EEPROM), or flash memory. Volatile memory may include random access memory (RAM) or external cache memory. By way of illustration and not limitation, RAM is available in many forms, such as static RAM (SRAM), dynamic RAM (DRAM), synchronous DRAM (SDRAM), double data rate SDRAM (DDR SDRAM), enhanced SDRAM (ESDRAM), synchronous link (Synchlink) DRAM (SLDRAM), memory bus (Rambus) direct RAM (RDRAM), direct memory bus dynamic RAM (DRDRAM), and memory bus dynamic RAM (RDRAM).

The technical features of the above embodiments may be arbitrarily combined. For the sake of concise description, not all possible combinations of the technical features in the above embodiments have been described. However, as long as the combinations of these technical features are not contradictory, they shall be considered as falling within the scope described in the present specification.

The above descriptions are merely specific embodiments of the present application, but the protection scope of the present application is not limited thereto. Any person familiar with the technical field could easily conceive of variations or substitutions within the technical scope disclosed by the present application, and these shall be covered within the protection scope of the present application. Therefore, the protection scope of the present application shall be subject to the appended claims.

## Claims

1. A boom identification method, executed by a processor, for identifying type and installation sequence of a boom, the boom comprising N sequentially connected boom sections, each of the boom sections having a built-in identification parameter (*a_{X}*,*b_{X},φ_{X}*), wherein parameters *a_{X}* and *b_{X}* are mapped to a type of a corresponding boom section, and a parameter *φ_{X}* characterizes a connection relationship between a boom section and a subsequent boom section, wherein the method comprises:
obtaining, by an Nth boom section, an output current *I*_{*N*2} of the Nth boom section through data processing; for a (N-1)th boom section to a first boom section, an Xth boom section receives an output current *I*_{(X+1)2} of a (X+1)th boom section as an input current *I*_{X1} of the Xth boom section, and processes the input current *I*_{X1} to obtain an output current *I*_{X2} of the Xth boom section, wherein X is a positive integer greater than or equal to 1;
processing an output current *I*₁₂ of the first boom section to obtain identification parameters from the first boom section to the Nth boom section;
obtaining a current boom section type and a connection relationship of the boom according to the identification parameters of respective boom sections, and determining whether types and connection relationships of the boom sections of the boom are correct according to the current boom section type and the connection relationship.

2. The method according to claim **1,** wherein the boom identification method further comprises:
limiting lifting of the boom when the current boom section type and the connection relationship are incorrect.

3. The method according to claim **1,** wherein in a step of obtaining the output current *I*_{X2} of the Xth boom section:
for the Nth boom section: using a current component as the output current *I*_{*N*2} of the Nth boom section;
for the (N-1)th boom section to the first boom section:
receiving the output current *I*_{(X+1)2} of a (X+1)th boom section as the input current *I*_{X1} of the Xth boom section;
performing a Fourier transform on the input current *I*_{X1} to obtain *F*(*I*_{*X*1}) ;
phase-shifting a component with zero initial phase in *F*(*I*_{*X*1}) to obtain *F*₂(*I*_{*X*1});
performing an inverse Fourier transform on *F*₂(*I*_{*X*1}*)* to obtain ${F}_{2}^{- 1} \left({I}_{X 1}\right)$;
adding the current component to ${F}_{2}^{- 1} \left({I}_{X 1}\right)$ to obtain *I*_{X2};
using *I*_{X2} as the output current *I*_{X2} of the Xth boom section.

4. The method according to claim 3, wherein for the Nth boom section, a current component *a_{N}* cos(*b_{N}t*) is used as the output current *I*_{*N*2} of the Nth boom section;
for the (N-1)th boom section to the first boom section, in a process of phase-shifting the component with zero initial phase in *F*(*I*_{*X*1}) to obtain *F*₂(*I*_{*X*1}), the component with zero initial phase in *F*(*I*_{*X*1}) is phase-shifted to the right by *φ_{X}* to obtain *F*₂(*I*_{*X*1}); in a process of obtaining *I*_{X2}, the current component *a_{X}* cos(*b_{X}t*) is added to ${F}_{2}^{- 1} \left({I}_{X 1}\right)$ to obtain ${I}_{X 2} = {F}_{2}^{- 1} \left({I}_{X 1}\right) + {a}_{X} cos \left({b}_{X}t\right)$*.*

5. The method according to claim **4,** wherein a step of obtaining the identification parameters from the first boom section to the Nth boom section specifically comprises:
performing the Fourier transform on the output current *I*₁₂ of the first boom section to obtain $F \left({I}_{12}\right) = π \left\{\begin{matrix}{a}_{1} \left[δ\left(ω-{b}_{1}\right)+δ\left(ω+{b}_{1}\right)\right] + {a}_{2} \left[{e}^{{jφ}_{1}}δ\left(ω-{b}_{2}\right)+{e}^{- {jφ}_{1}}δ\left(ω+{b}_{2}\right)\right] + \\ ⋯ + {a}_{N} \left[{e}^{{jφ}_{X}}δ\left(ω-{b}_{N}\right)+{e}^{- {jφ}_{X}}δ\left(ω+{b}_{N}\right)\right]\end{matrix}\right\}$;
obtaining the identification parameters (*a*₁*,b*₁,0), (*a*₂,*b*₂,*φ*₁), ···, (*a_{N},b_{N}*,*φ*_{*N*-1}) of the first boom section to the Nth boom section according to $F \left({I}_{12}\right) = π \left\{\begin{matrix}{a}_{1} \left[δ\left(ω-{b}_{1}\right)+δ\left(ω+{b}_{1}\right)\right] + {a}_{2} \left[{e}^{{jφ}_{1}}δ\left(ω-{b}_{2}\right)+{e}^{- {jφ}_{1}}δ\left(ω+{b}_{2}\right)\right] + \\ ⋯ + {a}_{N} \left[{e}^{{jφ}_{X}}δ\left(ω-{b}_{N}\right)+{e}^{- {jφ}_{X}}δ\left(ω+{b}_{N}\right)\right]\end{matrix}\right\}$.

6. The method according to claim **1,** wherein the boom comprises three sequentially connected boom sections G-H-K, and the method specifically comprises:
obtaining, by a K boom section, an output current *I_{K2}* of the K boom section through data processing, a H boom section receives the output current *I*_{*K*2} of the K boom section as an input current *I*_{*H*1} of the H boom section, and processes the input current *I*_{*H*1} of the H boom section to obtain an output current *I*_{*H*2} of the H boom section, a G boom section receives the output current *I*_{*H*2} of the H boom section as an input current *I*_{*G*1} of the G boom section, and processes the input current *I*_{*G*1} of the G boom section to obtain an output current *I*_{G2} of the G boom section;
processing the output current *I*_{G2} of the G boom section to obtain identification parameters from the K boom section to the G boom section in sequence as (*a_{G}*,*b_{G}*,0), (*a_{H},b_{H},φ_{G}*), (*a_{K},b_{K},φ_{H}*);
obtaining the current boom section type and the connection relationship of the boom according to the identification parameters (*a_{G},b_{G}*,0), (*a_{H},b_{H},φ_{G}*), (*a_{K}*,*b_{K},φ_{H}*) from the K boom section to the G boom section, and determining whether types and connection relationships of the G boom section, the H boom section, and the K boom section of the boom are correct according to the current boom section type and the connection relationship.

7. The method according to claim 6, wherein a step of obtaining the output current *I_{G2}* of the G boom section specifically comprises:
obtaining, by the K boom section, the output current *I*_{*K*2} of the K boom section as *I*_{*K*2} *= a_{K}* cos(*b_{K}t*) through the data processing;
receiving the output current *I*_{*K*2} of the K boom section as the input current *I*_{*H*1} of the H boom section;
performing the Fourier transform on the input current *I*_{*H*1} of the H boom section to obtain *F*(*I*_{H1})=*π*{*a_{K}*[*δ*(*ω*-*b_{K}*)+*δ*(*ω*+*b_{K}*)]};
phase-shifting to the right the component with zero initial phase in *F*(*I*_{*H*1}*)* by *φ_{H}* to obtain *F*₂(*I*_{*H*1})=*π*{*a_{K}*[*e^{jφH}δ*(*ω-b_{K}*)*+e^{jφH}δ*(*ω+b_{K}*)]};
performing the Fourier transform on *F*₂(*I*_{*H*1}) to obtain ${F}_{2}^{- 1} \left({I}_{H 1}\right) = {a}_{K} cos \left({b}_{K}t+{φ}_{H}\right)$;
adding a current component *a_{H}* cos(*b_{H}t*) to ${F}_{2}^{- 1} \left({I}_{H 1}\right)$ to obtain the output current *I*_{*H*2} of the H boom section as ${I}_{H 2} = {F}_{2}^{- 1} \left({I}_{H 1}\right) + {a}_{H} cos \left({b}_{H}t\right) = {a}_{H} cos \left({b}_{H}t\right) + {a}_{K} cos \left({b}_{K}t+{φ}_{H}\right)$;
receiving the output current *I*_{*H*2} of the H boom section as the input current *I*_{*G*1} of the G boom section;
performing the Fourier transform on the input current *I*_{*G*1} of the G boom section to obtain *F*(*I*_{*G*1})=*F*(*I*_{*H*2})=*π*{*a_{H}*[*δ*(*ω*-*b_{H}*)+*δ*(*ω*+*b_{H}*)]+*a_{K}*[*e^{jφH}δ*(*ω*-*b_{K}*)+*e^{jφH}δ*(*ω*+*b_{K}*)]};
phase-shifting to the right the component with zero initial phase in *F*(*I*_{*G*1}*)* by *φ_{G}* to obtain *F*₂(*I*_{G1})=*π*{*a_{H}*[*e^{jφG}δ*(*ω*-*b_{H}*)+*e^{jφG}δ*(*ω*+*b_{H}*)]+*a_{K}*[*e^{jφH}δ*(*ω*-*b_{K}*)+*e^{jφH}δ*(*ω*+*b_{K}*)]} *;*
performing the Fourier transform on *F*₂(*I*_{*G*1}) to obtain ${F}_{2}^{- 1} \left({I}_{G 1}\right) = {a}_{H} cos \left({b}_{H}t+{φ}_{G}\right) + {a}_{K} cos \left({b}_{K}t+{φ}_{H}\right)$;
adding a current component *a_{G}* cos(*b_{G}t*) to ${F}_{2}^{- 1} \left({I}_{G 1}\right)$ to obtain the output current *I*_{*G*2} of the G boom section as ${I}_{G 2} = {F}_{2}^{- 1} \left({I}_{G 1}\right) + {a}_{G} cos \left({b}_{G}t\right) = {a}_{G} cos \left({b}_{G}t\right) + {a}_{H} cos \left({b}_{H}t+{φ}_{G}\right) + {a}_{K} cos \left({b}_{K}t+{φ}_{H}\right)$;
a step of obtaining the identification parameters from the K boom section to the G boom section specifically comprises:
performing the Fourier transform on the output current *I*_{*G*2} of the G boom section to obtain $F \left({I}_{G 2}\right) = π \left\{\begin{matrix}{a}_{G} \left[δ\left(ω-{b}_{G}\right)+δ\left(ω+{b}_{G}\right)\right] + \\ {a}_{H} \left[{e}^{{jφ}_{G}}δ\left(ω-{b}_{H}\right)+{e}^{- {jφ}_{G}}δ\left(ω+{b}_{H}\right)\right] + {a}_{K} \left[{e}^{{jφ}_{H}}δ\left(ω-{b}_{K}\right)+{e}^{- {jφ}_{H}}\left(ω+{b}_{K}\right)\right]\end{matrix}\right\}$.
obtaining the identification parameters of the K boom section, the H boom section, and the G boom section in sequence as (*a_{G}*,*b_{G}*,0), (*a_{H},b_{H},φ_{G}*) (*a_{K},b_{K},φ_{H}*) according to $F \left({I}_{G 2}\right) = π \left\{\begin{matrix}{a}_{G} \left[δ\left(ω-{b}_{G}\right)+δ\left(ω+{b}_{G}\right)\right] + \\ {a}_{H} \left[{e}^{{jφ}_{G}}δ\left(ω-{b}_{H}\right)+{e}^{- {jφ}_{G}}δ\left(ω+{b}_{H}\right)\right] + {a}_{K} \left[{e}^{{jφ}_{H}}δ\left(ω-{b}_{K}\right)+{e}^{- {jφ}_{H}}\left(ω+{b}_{K}\right)\right]\end{matrix}\right\}$.

8. A processor, configured to execute the boom identification method according to any one of claims **1** to **7.**

9. A boom identification apparatus, for identifying type and installation sequence of a boom, the boom comprising a plurality of boom sections including a first boom section and an Nth boom section, wherein the boom identification apparatus comprises a plurality of boom section identification devices (31) and a controller (33), the plurality of boom section identification devices (31) being provided on the plurality of boom sections in a one-to-one correspondence, each of the boom section identification devices (31) comprising an identification calculation module (311), a current input module (313), and a current output module (315) sequentially connected, and the current input module (313) of an Xth boom section being connected to the current output module (315) of a (X+1)th boom section;
the current output module (315) of the boom section identification device (31) on the Nth boom section is used for using a current component as an output current *I*_{*N*2} of the Nth boom section;
the current input module (313) of the boom section identification device (31) of the Xth boom section other than the Nth boom section is used for receiving an output current *I*_{(X+1)2} of the (X+1)th boom section as an input current *I*_{X1} of the Xth boom section, and the identification calculation module (311) of the boom section identification device of the Xth boom section is used for acquiring the input current *I*_{X1} of the current input module (313) of the boom section identification device of the Xth boom section, and processing the input current *I*_{X1} of the Xth boom section to obtain an output current *I*_{X2} of the Xth boom section;
the controller (33) is used for processing an output current *I*₁₂ of the boom section identification device (31) of the first boom section to obtain identification parameters from the first boom section to the Nth boom section, and the controller (33) is further used for obtaining a current boom section type and a connection relationship of the boom according to the identification parameters of the respective boom sections, and determining whether types and connection relationships of the boom sections of the boom are correct according to the current boom section type and the connection relationship.

10. The boom identification apparatus according to claim **9,** wherein the boom identification apparatus further comprises a moment limiter (35), the moment limiter (35) being used for limiting lifting of the boom when the current boom section type and the connection relationship are incorrect.

11. The boom identification apparatus according to claim **9,** wherein the identification calculation module (311) of the boom section identification device (31) of the Xth boom section other than the Nth boom section is specifically used for receiving the output current *I*_{(X+1)2} of the (X+1)th boom section as the input current *I*_{X1} of the Xth boom section, performing the Fourier transform on the input current *I*_{X1} of the Xth boom section to obtain *F*(*I*_{*X*1}), phase-shifting a component with zero initial phase in *F*(*I*_{*X*1}) to obtain *F*₂(*I*_{*X*1}), performing an inverse Fourier transform on *F*₂(*I*_{*X*1}) to obtain ${F}_{2}^{- 1} \left({I}_{X 1}\right)$, adding a current component to ${F}_{2}^{- 1} \left({I}_{X 1}\right)$ to obtain *I*_{X2} , and using *I*_{X2} as the output current of the Xth boom section.

12. The boom identification apparatus according to claim **10,** wherein when the identification calculation module (311) of the boom section identification device (31) of the Xth boom section other than the Nth boom section phase-shifts a component with zero initial phase in *F*(*I*_{*X*1}) to obtain *F*₂(*I*_{*X*1}), the component with zero initial phase in *F*(*I*_{*X*1}) is phase-shifted to the right by *φ_{X}* to obtain *F*₂(*I*_{*X*1}); when the identification calculation module (311) of the boom section identification device (31) of the Xth boom section other than the Nth boom section adds the current component to ${F}_{2}^{- 1} \left({I}_{X 1}\right)$ to obtain *I*_{X2} , a current component *a_{X}* cos(*b_{X}t*) is added to ${F}_{2}^{- 1} \left({I}_{X 1}\right)$ to obtain ${I}_{X 2} = {F}_{2}^{- 1} \left({I}_{X 1}\right) + {a}_{X} cos \left({b}_{X}t\right)$.

13. The boom identification apparatus according to claim 9, wherein the controller (33) is specifically used for performing a Fourier transform on the output current *I*₁₂ of the first boom section to obtain $F \left({I}_{12}\right) = π \left\{\begin{matrix}{a}_{1} \left[δ\left(ω-{b}_{1}\right)+δ\left(ω+{b}_{1}\right)\right] + {a}_{2} \left[{e}^{{jφ}_{1}}δ\left(ω-{b}_{2}\right)+{e}^{- {jφ}_{1}}δ\left(ω+{b}_{2}\right)\right] + \\ ⋯ + {a}_{N} \left[{e}^{{jφ}_{X}}δ\left(ω-{b}_{N}\right)+{e}^{- {jφ}_{X}}δ\left(ω+{b}_{N}\right)\right]\end{matrix}\right\}$, and obtaining the identification parameters (*a*₁,*b*₁,0), (*a*₂,*b*₂,*φ*₁), ···, (*a_{N}*,*b_{N}*,*φ*_{*N*-1})of the first boom section to the Nth boom section according to $F \left({I}_{12}\right) = π \left\{\begin{matrix}{a}_{1} \left[δ\left(ω-{b}_{1}\right)+δ\left(ω+{b}_{1}\right)\right] + {a}_{2} \left[{e}^{{jφ}_{1}}δ\left(ω-{b}_{2}\right)+{e}^{- {jφ}_{1}}δ\left(ω+{b}_{2}\right)\right] + \\ ⋯ + {a}_{N} \left[{e}^{{jφ}_{X}}δ\left(ω-{b}_{N}\right)+{e}^{- {jφ}_{X}}δ\left(ω+{b}_{N}\right)\right]\end{matrix}\right\}$.

14. A boom identification apparatus, for identifying the type and installation sequence of a boom, the boom comprising three sequentially connected boom sections G-H-K, wherein the boom identification apparatus comprises a plurality of boom section identification devices and a controller (33), the plurality of boom section identification devices comprising a G boom section identification device (31A), an H boom section identification device (31B), and a K boom section identification device (31C), the G boom section identification device (31A), the H boom section identification device (31B), and the K boom section identification device (31C) being provided on the G boom section, the H boom section, and the K boom section in a one-to-one correspondence, each boom section identification device comprising an identification calculation module (311), a current input module (313), and a current output module (315) sequentially connected, and the current output module (315) of the K boom section identification device (31C) being connected to the current input module (313) of the H boom section identification device (31B), the current output module (315) of the H boom section identification device (31B) being connected to the current input module (313) of the G boom section identification device (31A), and the current output module (315) of the G boom section identification device (31A) being connected to the controller (33);
the identification calculation module (311) of the K boom section identification device (31C) is used for obtaining an output current *I*_{*K*2} of the K boom section through data processing;
the current input module (313) of the H boom section identification device (31B) is used for receiving the output current *I*_{*K*2} output by the current output module (315) of the K boom section identification device (31C) as an input current *I*_{*H*1} of the H boom section, and the identification calculation module (311) of the H boom section identification device (31B) is used for processing the input current *I*_{*H*1} of the H boom section to obtain an output current *I_{H2}* of the H boom section;
the current input module (313) of the G boom section identification device (31A) is used for receiving the output current *I*_{*H*2} of the H boom section output by the current output module (315) of the H boom section identification device (31B) as an input current *I*_{*G*1} of the G boom section, the identification calculation module (311) of the G boom section identification device (31A) is used for processing the input current *I*_{*G*1} of the G boom section to obtain an output current *I*_{*G*2} of the G boom section, and the current output module (315) of the G boom section identification device (31A) is used for outputting the output current *I*_{*G*2} of the G boom section to the controller (33);
the controller (33) is used for processing the output current *I*_{*G*2} output by the current output module (315) of the G boom section identification device (31A) to obtain identification parameters from the K boom section to the G boom section, and the controller (33) is further used for obtaining a current boom section type and a connection relationship of the boom according to the identification parameters from the K boom section to the G boom section, and determining whether types and connection relationships of the boom sections of the boom are correct according to the current boom section type and the connection relationship.

15. The boom identification apparatus according to claim **14,** wherein the identification calculation module (311) of the H boom section identification device (31B) is specifically used for receiving the output current *I_{K2}* of the K boom section as the input current *I*_{*H*1} of the H boom section, performing a Fourier transform on the input current *I*_{*H*1} of the H boom section to obtain *F*(*I*_{*H*1})=*π*{*a_{K}*[*δ*(*ω-b_{K}*)+*δ*(*ω+b_{K}*)]} , phase-shifting to the right the component with zero initial phase in *F*(*I*_{*H*1}) by *φ_{H}* to obtain *F*₂(*I_{H}*1)*=π*{*a_{K}*[*e^{jφH}δ*(*ω-b_{K}*)+*e^{jφH}δ*(*ω+b_{K}*)]}, performing the Fourier transform on *F₂*(*I*_{*H*1}) to obtain ${F}_{2}^{- 1} \left({I}_{H 1}\right) = {a}_{K} cos \left({b}_{K}t+{φ}_{H}\right)$, adding a current component *a_{H}* cos(*b_{H}t*) to ${F}_{2}^{- 1} \left({I}_{H 1}\right)$ to obtain the output current *I*_{*H*2} of the H boom section as ${I}_{H 2} = {F}_{2}^{- 1} \left({I}_{H 1}\right) + {a}_{H} cos \left({b}_{H}t\right) = {a}_{H} cos \left({b}_{H}t\right) + {a}_{K} cos \left({b}_{K}t+{φ}_{H}\right)$;
the identification calculation module (311) of the G boom section identification device (31A) is specifically used for receiving the output current *I*_{*H*2} of the H boom section as the input current *I*_{*G*1} of the G boom section, performing a Fourier transform on the input current *I*_{*G*1} of the G boom section to obtain *F*(*I*_{*G*1})=*F*(*I*_{*H*2})=*π*{*a_{H}*[*δ*(*ω-b_{H}*)+*δ*(*ω+b_{H}*)]*+a_{K}*[*e^{jφH}δ*(*ω-b_{K}*)+*e^{jφH}δ*(*ω*+*b_{K}*)]}, phase-shifting to the right the component with zero initial phase in *F*(*I*_{*G*1}) *by φ_{G}* to obtain *F*₂(*I*_{*G*1})=*π*{*a_{H}*[*e^{jφG}δ*(*ω-b_{H}*)+*e^{jφG}S*(*ω+b_{H}*)]+*a_{K}*[*e^{jφH}δ*(*ω*-*b_{K}*)+*e^{jφH}δ*(*ω*+*b_{K}*)]}, performing the Fourier transform on *F*₂(*I*_{*G*1}) to obtain ${F}_{2}^{- 1} \left({I}_{G 1}\right) = {a}_{H} cos \left({b}_{H}t+{φ}_{G}\right) + {a}_{K} cos \left({b}_{K}t+{φ}_{H}\right)$, adding a current component *a_{G}* cos(*b_{G}t*) to ${F}_{2}^{- 1} \left({I}_{G 1}\right)$ to obtain the output current *I*_{G2} of the G boom section as ${I}_{G 2} = {F}_{2}^{- 1} \left({I}_{G 1}\right) + {a}_{G} cos \left({b}_{G}t\right) = {a}_{G} cos \left({b}_{G}t\right) + {a}_{H} cos \left({b}_{H}t+{φ}_{G}\right) + {a}_{K} cos \left({b}_{K}t+{φ}_{H}\right)$;
the controller (33) is specifically used for performing the Fourier transform on the output current *I*_{*G*2} of the G boom section to obtain $F \left({I}_{G 2}\right) = π \left\{\begin{matrix}{a}_{G} \left[δ\left(ω-{b}_{G}\right)+δ\left(ω+{b}_{G}\right)\right] + \\ {a}_{H} \left[{e}^{{jφ}_{G}}δ\left(ω-{b}_{H}\right)+{e}^{- {jφ}_{G}}δ\left(ω+{b}_{H}\right)\right] + {a}_{K} \left[{e}^{{jφ}_{H}}δ\left(ω-{b}_{K}\right)+{e}^{- {jφ}_{H}}\left(ω+{b}_{K}\right)\right]\end{matrix}\right\}$;
obtaining the identification parameters of the K boom section, the H boom section, and the G boom section in sequence as (*a_{G}*,*b_{G}*,0), (*a_{H},b_{H},φ_{G}*), (*a_{K},b_{K},φ_{H})* according to $F \left({I}_{G 2}\right) = π \left\{\begin{matrix}{a}_{G} \left[δ\left(ω-{b}_{G}\right)+δ\left(ω+{b}_{G}\right)\right] + \\ {a}_{H} \left[{e}^{{jφ}_{G}}δ\left(ω-{b}_{H}\right)+{e}^{- {jφ}_{G}}δ\left(ω+{b}_{H}\right)\right] + {a}_{K} \left[{e}^{{jφ}_{H}}δ\left(ω-{b}_{K}\right)+{e}^{- {jφ}_{H}}\left(ω+{b}_{K}\right)\right]\end{matrix}\right\}$.

16. A computer-readable storage medium, wherein a computer program is stored on the computer-readable storage medium, and when the computer program is executed by a processor, steps of the method according to any one of claims **1** to **7** are implemented.
